# EUROPEAN PATENT APPLICATION

(11) **EP 4 800 472 A1**
(43) Date of publication of application: **02.09.2026**
(21) Application number: 26159586.2
(22) Date of filing: 19.02.2026
(51) Int. Cl.: G03B 17/14, B65G 61/00, B25J 15/00

(54) **IMAGE PICKUP APPARATUS**

(30) Priority: 26.02.2025 JP 2025029169
(71) Applicant: Canon Kabushiki Kaisha, Tokyo 146-8501 (JP)
(72) Inventor: KAWASHIMA, Hideki, Tokyo, 146-8501 (JP)
(74) Representative: Canon Europe Limited

(57) **Abstract**

An image pickup apparatus (100) includes an image sensor, and a mount unit (120, 121) configured to detachably hold an interchangeable lens. The mount unit has a plurality of concave portions (120a, 120b, 120c, 120d) in a side surface of the mount unit. The concave portions are arranged so that, in projection in a direction parallel to an axis passing through a center of the mount unit, a triangle with three of points included in the concave portions as vertices contains the center.

## Description

### TECHNICAL FIELD

The present disclosure relates to an image pickup apparatus having a mount unit configured to detachably hold an interchangeable lens.

### BACKGROUND

Automation of the assembly of image pickup apparatuses has recently been promoted. Japanese Patent Application Laid-Open No. 2001-246591 discloses a configuration in which an arm tip of an assembly apparatus has a support shape corresponding to a plurality of components of different shapes. Japanese Patent Application Laid-Open No. 2024-37555 discloses a configuration that aligns the centers of the lens mounts in the width direction of two image pickup apparatuses with different image sensor sizes.

However, in a case where the configuration of Japanese Patent Application Laid-Open No. 2001-246591 is used in an assembly process in which a plurality of assembly apparatuses are connected, a transport arm is required between the apparatuses. Furthermore, to reduce the size of the image pickup apparatus and standardize assembly lines, it is necessary to change the size of the exterior components, but the configuration disclosed in Japanese Patent Application Laid-Open No. 2024-37555 cannot accommodate this.

### SUMMARY

The present disclosure in its first aspect provides an image pickup apparatus as specified in claims 1 to 14.

Features of the present disclosure will become apparent from the following description of embodiments with reference to the attached drawings. The following description of embodiments is described by way of example.

### BRIEF DESCRIPTION OF THE DRAWINGS

Fig. 1 is an external view of a camera body according to a first embodiment.
Fig. 2 is an exploded perspective view of the camera body in the first embodiment.
Fig. 3 is an exploded perspective view of the front side of the camera body in the first embodiment.
Fig. 4 is a front view of a base member in the first embodiment.
Figs. 5A, 5B, and 5C illustrate a base unit in the first embodiment.
Figs. 6A and 6B are perspective views of the base unit and a transport arm in the first embodiment.
Figs. 7A, 7B, and 7C are front views of the base unit in the first embodiment.
Figs. 8A, 8B, 8C, 8D, 8E, and 8F are front views of the base unit in the first embodiment.
Figs. 9A and 9B illustrate a state just after the transport arm has closed to hold the base unit in the first embodiment.
Figs. 10A, 10B, and 10C illustrate a state in which the base unit in the first embodiment being lifted by the transport arm.
Fig. 11 is a graph illustrating a relationship between a distance between vertices and a tilt amount in the first embodiment.
Figs. 12A, 12B, and 12C illustrate a base unit in a second embodiment.
Figs. 13A and 13B illustrate concave portions in the second embodiment.
Figs. 14A, 14B, and 14C illustrate a base unit in a third embodiment.
Fig. 15 is an exploded perspective view of a base unit and a front cover in a fourth embodiment.

### DESCRIPTION OF THE EMBODIMENTS

Referring now to the accompanying drawings, a detailed description will be given of embodiments according to the present disclosure. Corresponding elements in respective figures will be designated by the same reference numerals, and a duplicate description thereof will be omitted. Each of the embodiments of the present invention described below can be implemented solely or as a combination of a plurality of the embodiments or features thereof where necessary or where the combination of elements or features from individual embodiments in a single embodiment is beneficial.

### FIRST EMBODIMENT

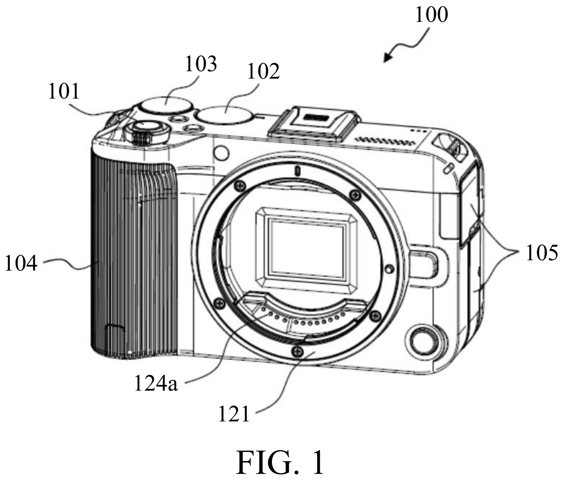

Fig. 1 is an external view of a camera body (image pickup apparatus) 100 according to this embodiment. A shutter button 101 is an operation member operable by the user to instruct the camera body 100 to capture an image. A mode dial 102 is an operation member operable by the user to switch between a variety of modes. A main electronic dial 103 is an operation member rotatable by the user to change the setting of the imaging parameter. A grip portion 104 has a shape to be easily held in the right hand of a user holding the camera body 100. Terminal covers 105 are covers that protect terminal units provided on the camera body 100. The terminal unit is configured to allow attachment of cables for connection to external devices, etc. The terminal unit is provided with a plurality of terminals, such as an HDMI (registered trademark) terminal, a USB terminal, and a headphone terminal. The USB terminal can also be used to supply power from an external source. A communication terminal 124a is provided inside a mount unit that detachably holds an interchangeable lens (not illustrated) and is used for communication between the camera body 100 and the interchangeable lens.

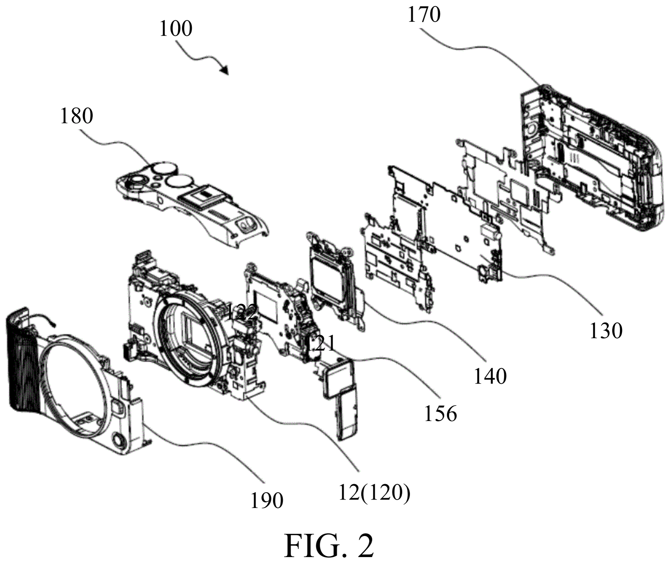

Fig. 2 is an exploded perspective view of the camera body 100 according to this embodiment. Subcomponents are assembled to a base member 120 inside a base unit 12. A shutter unit 156, an image sensor unit 140 having an image sensor, and a main board 130 are arranged so as to overlap each other, and a rear cover unit 170, a top cover unit 180, and a front cover unit (exterior member) 190 are assembled to enclose them.

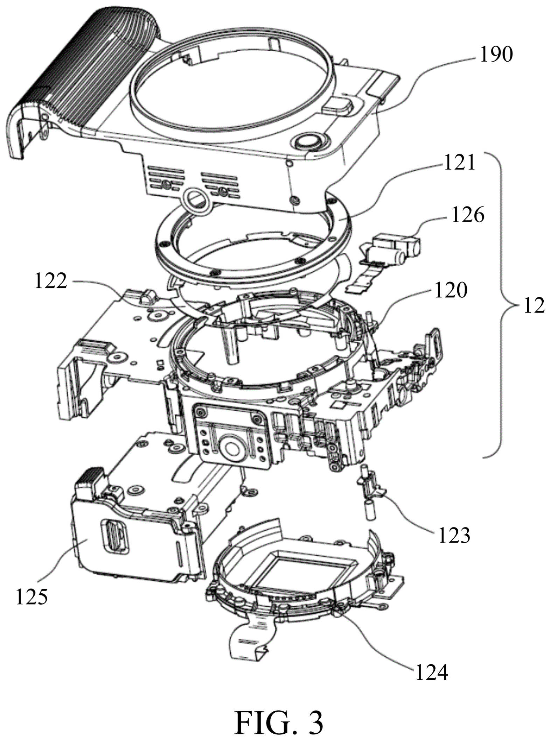

Fig. 3 is an exploded perspective view of the front side of the camera body 100 according to this embodiment. A lens mount 121 and a mount spring 122 are assembled from the object-side surface (front surface) of the base member 120. The mount spring 122 is disposed between the base member 120 and the lens mount 121 and secured with screws. The mount spring 122 is a stainless steel leaf spring that biases the lens mount 121 so that an interchangeable lens is attached to the lens mount 121 without rattle. The lens mount 121 and a part of the base member 120 form a mount unit that detachably holds the interchangeable lens.

A terminal flexible unit 126 mounted with a microphone terminal and a remote control terminal is also assembled from the front surface. The lens contact communication unit 124 and a battery housing unit 125 are assembled from the image-sensor-side surface (rear surface) of the base member 120. When assembling the lens contact communication unit 124, a lens lock pin 123 is also slidably supported between it and the lens mount 121. The front cover unit 190 is illustrated to show the positional relationship, but is actually assembled in the latter half of the assembly process.

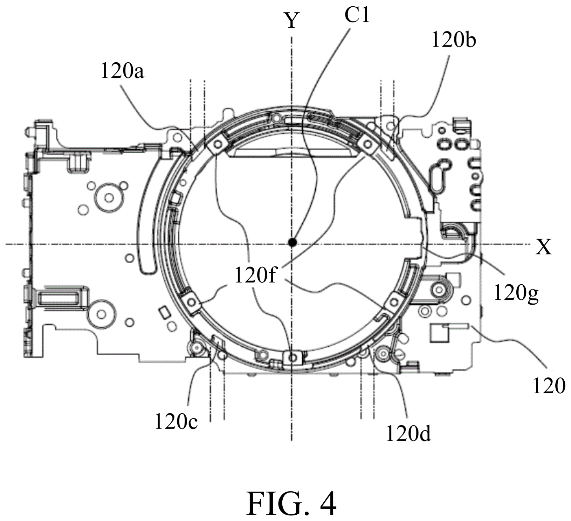

Fig. 4 is a front view of the base member 120 according to this embodiment. The base member 120 is a magnesium die-cast molded product. The base member 120 has a tapped hole 120f for fixing the lens mount 121. The base member 120 also has concave portions 120a, 120b, 120c, and 120d. The concave portions 120a, 120b, 120c, and 120d are shaped to open on the front side (object side). This eliminates the need to change the split structure of the base member 120 and adds complex structures such as a sliding structure. The concave portions (first concave portions) 120a and 120b are disposed on a first side of a side surface 120s of the base member 120, which is divided by a plane that passes through a center C1 of the mount and is perpendicular to the imaging surface of the image sensor. The concave portions (second concave portions) 120c and 120d are disposed on a second side of the side surface 120s, opposite the first side.

An X-axis is an axis parallel to the horizontal direction and passing through the center C1, and a Y-axis is an axis perpendicular to the X-axis. A Z-axis is an optical axis direction. The widths and positions of the concave portions 120a, 120b, 120c, and 120d in the X-axis direction are illustrated with auxiliary lines.

The concave portion 120a is located at a position that is approximately symmetrical to the concave portion 120c with respect to the YZ plane (a boundary line between the first and second sides of the side surface 120s in projection) that passes through the center C1. The concave portion 120b is located at a position that is approximately symmetrical to the concave portion 120d with respect to the YZ plane that passes through center C1.

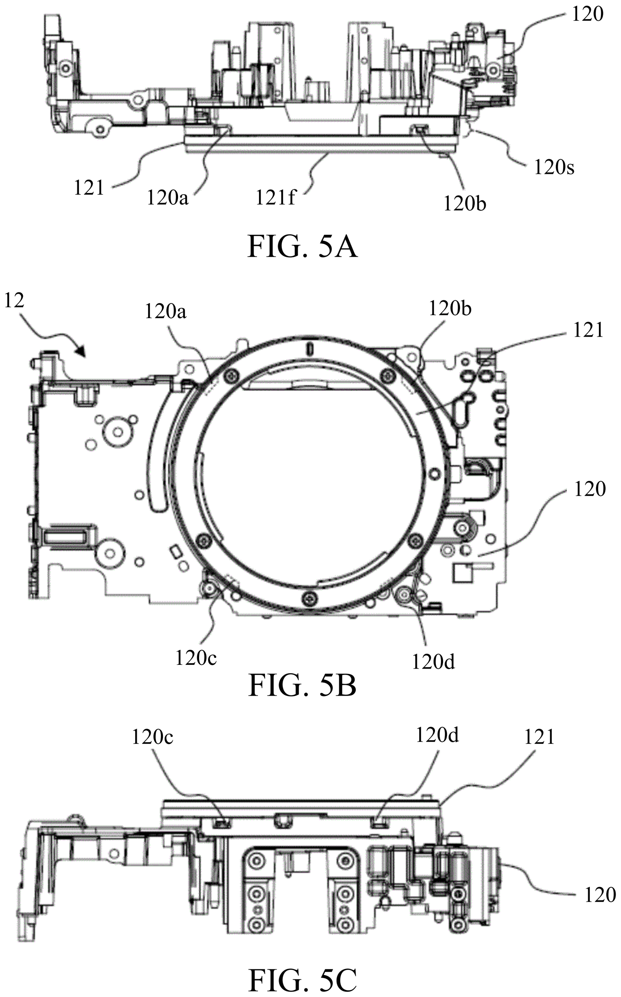

Figs. 5A, 5B, and 5C illustrate the base unit 12 in this embodiment. The mount spring 122 is assembled to the base member 120. The lens mount 121 is fixed to the base member 120 with screws. Fig. 5B is a front view. Figs. 5A and 5C are views of Fig. 5B when viewed from above and below, respectively.

As illustrated in Fig. 5A, the concave portions 120a and 120b can be seen from the top surface of the base member 120. As discussed above, the concave portions 120a and 120b have shapes that open to the front, but when lens mount 121 is assembled, the lens mount 121 serves as a lid and the concave portions become hole-shaped. That is, a plurality of surfaces that form the concave portions 120a and 120b include a first surface that is a part of the lens mount 121 and a second surface that is a part of the base member 120. The side surface 120s is a surface that is perpendicular (including approximately perpendicular) to a front surface 121f, which is the object-side surface of the lens mount 121. Although the side surface 120s is perpendicular to the front surface 121f in this embodiment, it may be tilted relative to the front surface 121f.

As illustrated in Fig. 5C, the concave portions 120c and 120d can be seen from the bottom surface of the base member 120. As discussed above, the concave portions 120c and 120d have shapes that open toward the front surface, but when lens mount 121 is assembled, the lens mount 121 becomes a lid, giving them a hole-like shape. In other words, the plurality of surfaces that form the concave portions 120c and 120d include a first surface that is a part of lens mount 121 and a second surface that is a part of base member 120.

The concave portions 120a, 120b, 120c, and 120d are provided to improve assembly. When holding or transporting during assembly, pins on a jig can be inserted into the concave portions 120a, 120b, 120c, and 120d to hold the base unit 12.

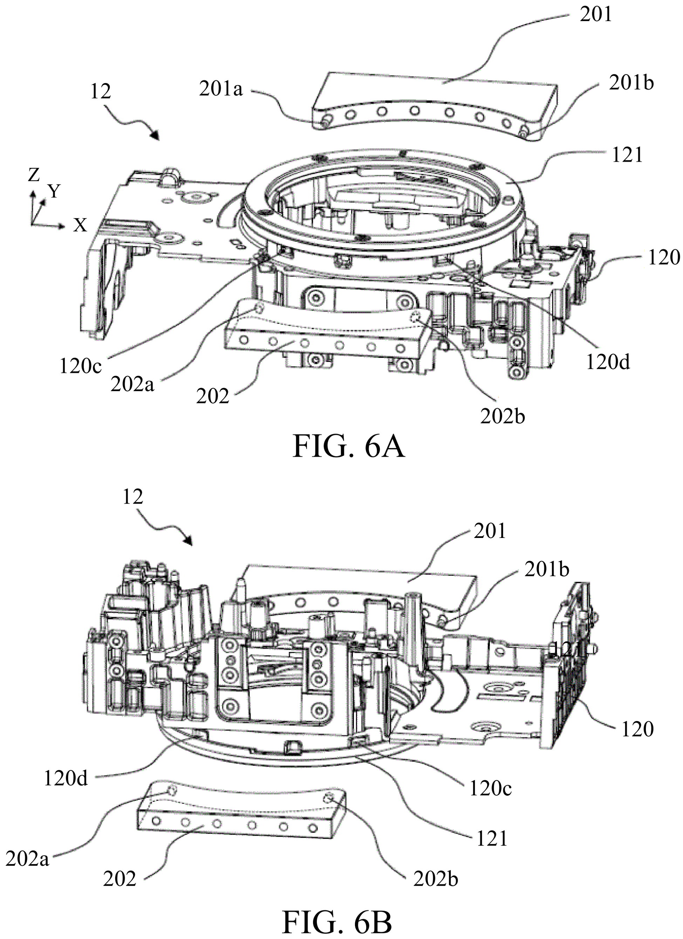

Figs. 6A and 6B are perspective views illustrating the base unit 12 and transport arms 201 and 202 in this embodiment. Figs. 6A and 6B illustrate the base unit 12 and transport arms 201 and 202 placed with the lens mount 121 facing upward and downward, respectively.

As illustrated in Fig. 6A, the transport arms 201 and 202 are disposed on the top and bottom sides of the base unit 12, respectively. The base unit 12 can be held by moving the transport arms 201 and 202 so that they sandwich the base member 120 from the top and bottom sides. The transport arms 201 and 202 are supported by a drive mechanism (not illustrated) so that they can move linearly in the sandwiching direction. With the base unit 12 sandwiched and held between the transport arms 201 and 202, it can be moved to an arbitrary location by moving the transport arms 201 and 202 in the lifting or sliding direction.

Insertion pins 201a and 201b are fixed to the transport arm 201, which is located on the top surface side of the base unit 12. The positions of the insertion pins 201a and 201b correspond to the concave portions 120a and 120b in the base member 120.

The insertion pins 202a and 202b are fixed to the transport arm 202, which is located on the bottom surface side of the base unit 12. The positions of the insertion pins 202a and 202b correspond to the concave portions 120c and 120d in the base member 120.

When the transport arms 201 and 202 are closed toward the lens mount 121, the insertion pins 201a, 201b, 202a, and 202b are inserted into the concave portions 120a, 120b, 120c, and 120d, respectively. The insertion pins 201a, 201b, 202a, and 202b are engaged with concave portions 120a, 120b, 120c, and 120d, respectively, thereby holding the base member 120 relative to the transport arms 201 and 202.

As the process proceeds, a variety of components are assembled to the base member 120, and the center-of-gravity position and weight change, but the inserted insertion pins 201a, 201b, 202a, and 202b can allow the lens mount 121 to continue to be held without the risk of it falling off. Even if vibrations occur during transport and the spacing between the transport arms 201 and 202 changes, the inserted insertion pins 201a, 201b, 202a, and 202b allow the lens mount 121 to continue to be held without the risk of it falling off.

As illustrated in Fig. 6B, even when the lens mount 121 is facing downward, it can be sandwiched and held using the transport arms 201 and 202, as in Fig. 6A. As discussed in Fig. 4, the concave portions 120a and 120b on the top surface are located approximately symmetrically to the concave portions 120c and 120d on the bottom surface with respect to the YZ plane passing through the center C1. This means that the distance between the concave portions relative to the center C1 does not change even when the lens mount 121 is flipped from an upward to a downward orientation by an inversion operation. Thereby, the lens mount 121 can be supported with the same transport arms 201 and 202 whether the lens mount 121 is facing upward or downward. That is, in a case where a transport arm is provided for each transport between a plurality of processes, the transport arms can be standardized.

In this embodiment, the gripping direction of each of the transport arms 201 and 202 is the short direction (Y direction) of the camera body 100, but it may be other directions such as the left-right direction or diagonal direction of the base member 120. A configuration in which the transport arms 201 and 202 are closed for sandwiching in the short direction of the camera body 100 is advantageous in reducing a retraction amount of each of the transport arms 201 and 202, the sizes of the transport arms 201 and 202, and the size of the assembled apparatus. The arrangement of the insertion pins of the transport arms 201, 202, which are arranged approximately symmetrically with respect to the YZ plane passing through the center C1, also needs to be changed properly according to the sandwiching direction.

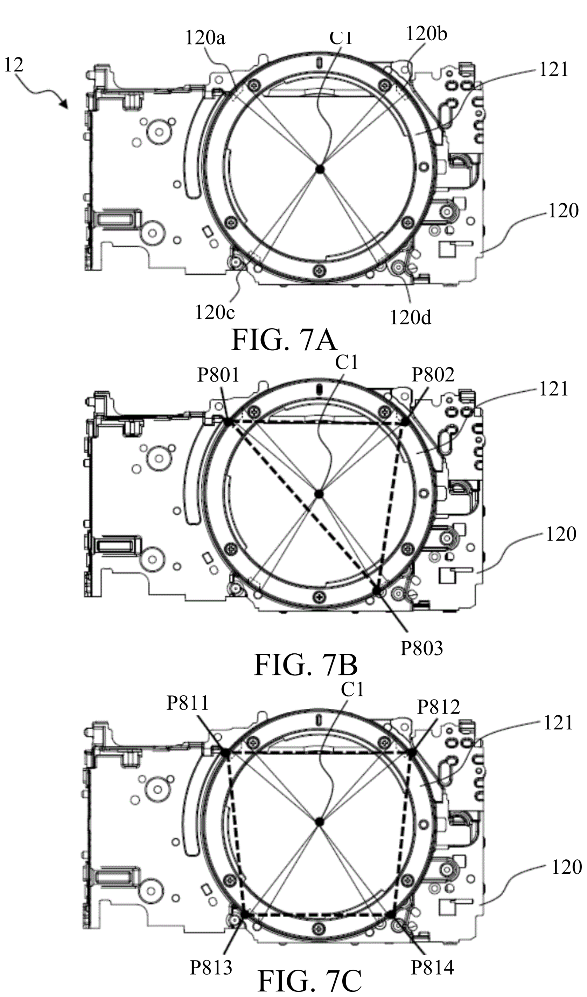

Figs. 7A, 7B, and 7C are front views of the base unit 12 in this embodiment.

In Fig. 7A, the lens mount 121 is installed, so the concave portions 120a, 120b, 120c, and 120d are illustrated with broken lines in a transparent view. Eight auxiliary lines are also illustrated connecting the center C1 and the intersections of the concave portions 120a, 120b, 120c, and 120d with the outer diameter of the lens mount 121. The following description of illustration will primarily involve constructing (drawing) points within the projection of the concave portions, and defining the shape.

In Fig. 7B, a triangle is constructed with three vertices, P801, P802, and P803, among the intersections of concave portions 120a, 120b, 120c, and 120d with the outer diameter of the lens mount 121. Due to the arrangement of the concave portions in this embodiment, a triangle containing the center C1 can be constructed with any combination. The center of gravity of the base unit 12 tends to be within the projection of the lens mount 121, or near the center C1 as the component assembly proceeds. Therefore, even when the base unit 12 is lifted by the transfer arms 201 and 202, tilt is small, and it can be held in a stable state.

In Fig. 7C, a quadrangle is constructed with vertices P811, P812, P813, and P814, four of the intersections of the concave portions 120a, 120b, 120c, and 120d and the outer diameter of the lens mount 121. Since the area of the quadrangle P811P812P813P814 is larger than that of the triangle P801P802P803, it is less likely to tilt and can provide stable support even if the center of gravity shifts. Furthermore, a polygon equal to or more than a rectangle can also be held stably by securing a sufficiently large area.

This embodiment selects the vertices from the intersections of the concave portions and the outer diameter of the lens mount 121, but the present disclosure is not limited to this embodiment, and any point that is included in the concave portion (provided within the concave portion and constituting the concave portion) when projected in a direction parallel to an axis passing through the center C1 may be selected as a vertex.

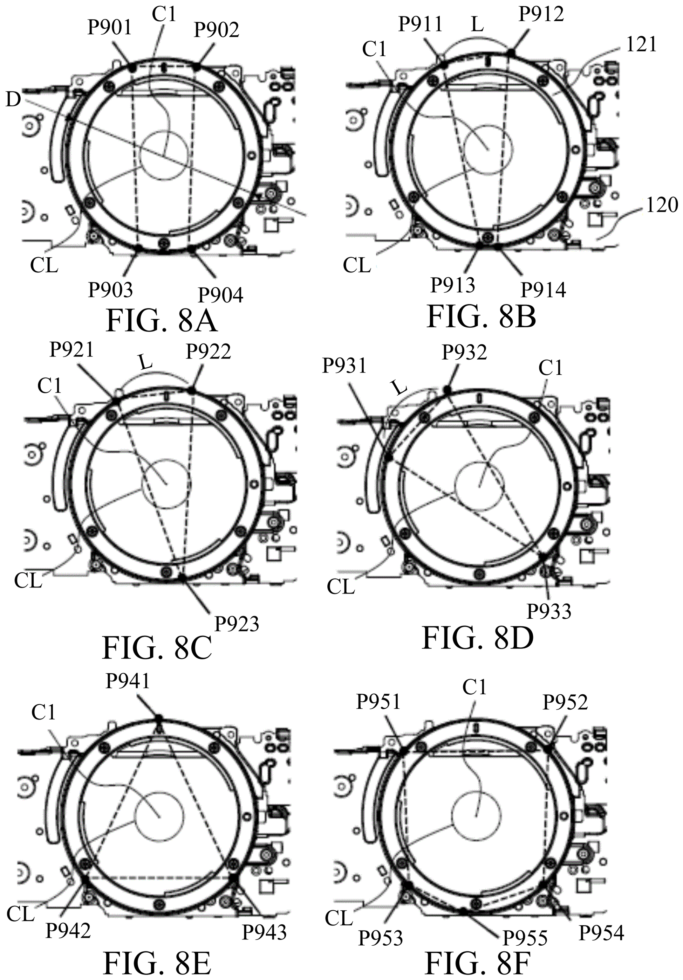

Figs. 8A, 8B, 8C, 8D, 8E, and 8F are front views of the base unit 12 when the concave portions are disposed differently from those illustrated in Figs. 7A, 7B, and 7C. The concave portions are not illustrated, and only the positions of the vertices after construction are illustrated. Six example patterns of vertex positions are illustrated. Within the lens mount 121, a constructed circle CL is illustrated that is concentric with the center C1 and has a diameter that is a quarter of the diameter D of the lens mount 121.

With reference to Figs. 8A and 8B, a description will be given of the case where four vertices can be obtained. The concave portion configurations that allow four vertices to be obtained include four concave portions and two wide concave portions, one above the other. Fig. 8A illustrates the case where a rectangle P901P902P903P904 is constructed, and Fig. 8B illustrates the case where a rectangle P911P912P913P914 is constructed.

As illustrated in Fig. 8A, when the rectangle P901P902P903P904 contains the constructed circle CL, the distance between the upper or lower sides is equal to or more than a quarter of the lens mount diameter D.

As illustrated in Fig. 8B, in a case where the distance between the vertices of the upper or lower sides of the rectangle P911P912P913P914 is narrow, that is, in a case where the upper or lower concave portioned area is small, the center C1 is contained but the constructed circle CL cannot be contained. The length L of the upper sides P911P912 is set to be equal to or more than a quarter of the lens mount diameter D.

While both the states illustrated in Figs. 8A and 8B are supportable states, Fig. 8A allows for more stable transport than Fig. 8B, even if the center of gravity of the transport component is shifted or tilted. When the four vertices are considered, stability can be further improved by considering the shape and arrangement of the concave portion so that it contains the constructed circle CL.

With reference to Figs. 8C and 8D, a description will be given of the cases where three vertices can be obtained. The concave portion configuration that allow three vertices to be obtained can include three concave portions or two wide, upper and lower, concave portions. Fig. 8C illustrates the case where a triangle P921P922P923 is constructed, and Fig. 8D illustrates the case where a triangle P931P932P933 is constructed.

As illustrated in Fig. 8C, the triangle P921P922P923 contains the center C1 but does not contain the constructed circle CL. The length L of the sides P921P922 is set to a distance that is equal to or greater than at least a quarter of the lens mount diameter D.

As illustrated in Fig. 8D, the triangle P931P932P933 contains the center C1, but the vertices P931 and P932 may be located offset to one side of the lens mount 121. The length L of the sides P931P922 is set to a distance that is equal to or greater than a quarter of the lens mount diameter D.

Both the states illustrated in Figs. 8C and 8D are supportable states, but since they do not contain the constructed circle CL, they may be less stable than Fig. 8A.

When considering a quadrangle or triangle, the center C1 may be contained within the triangle and that the side may have a length that is equal to or greater than a predetermined length. The length of the shortest side may be equal to or greater than a quarter of the diameter D of the lens mount 121.

Fig. 8E illustrates the case where a triangle P941P942P943 is constructed, and Fig. 8F illustrates the case where a pentagon P951P952P953P954P955 is constructed.

As illustrated in Fig. 8E, the triangle P941P942P943 is close to an equilateral triangle with the largest constructable area within the lens mount 121, and contains the center C1 and constructed circle CL. Thereby, it is less likely to tip and allows for stable support. In a case where the triangle P941P942P943 can be constructed, it will provide the highest stability among three-point support.

As illustrated in Fig. 8F, the pentagon P951P952P953P954P955 contains the center C1 and the constructed circle CL. In the case of the pentagon, even if the center of gravity significantly offsets, there is a high possibility that the center C1 and the constructed circle CL will be contained, making stable support possible. Many vertices may be used; in the case of four or more vertices, stable support can be achieved by considering the shape and arrangement of the concave portion so that it contains the constructed circle CL, which is a quarter of the diameter D of the lens mount 121. At this time, it is possible to confirm that the conditions for support can be met by constructing a triangle or quadrangle by combining the vertices of the pentagon P951P952P953P954P955.

In this embodiment, the number of vertices has been described as three, four, and five, and the triangles, quadrangles, and pentagons connecting them. However, it is also possible to construct other polygons and make this determination. As long as it does not affect strength or other components, the width may be maximized and a concave portion may have a D-cut shape or H-cut shape relative to the cylindrical portion of the mount unit.

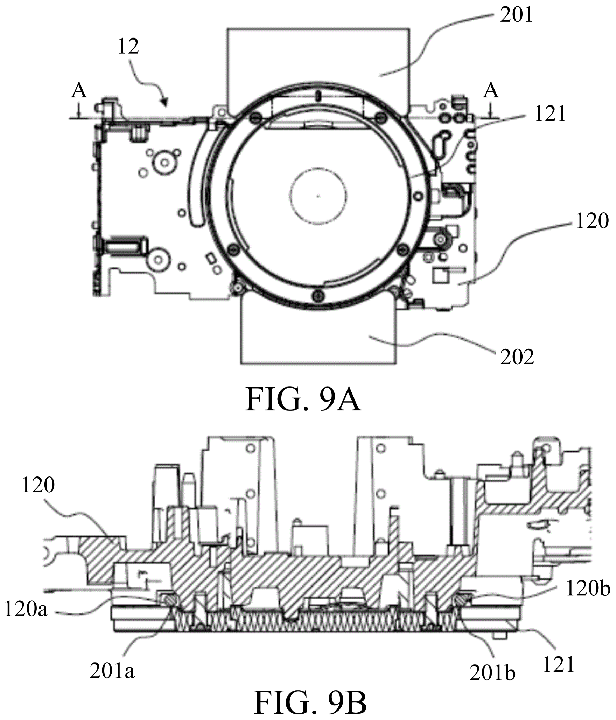

A description will be given of the distance between the concave portions and the tilt when supporting the base unit 12. Figs. 9A and 9B illustrate the state just after the transfer arms 201 and 202 have closed to hold the base unit 12. Fig. 9A is a front view, and Fig. 9B is a sectional view taken along line A-A in Fig. 9A.

As illustrated in Fig. 9A, the base unit 12 is closed so that transfer arms 201 and 202 sandwich the lens mount 121, and the insertion pins 201a, 201b, 202a, and 202b are inserted into the concave portions 120a, 120b, 120c, and 120d.

As illustrated in Fig. 9B, the insertion pins are inserted into the concave portions on left and right positions of the center C1. Fig. 9B illustrates the state just before the base unit 12 is lifted by the transport arms 201 and 202 and just after the insertion pins are inserted, and no tilt has occurred.

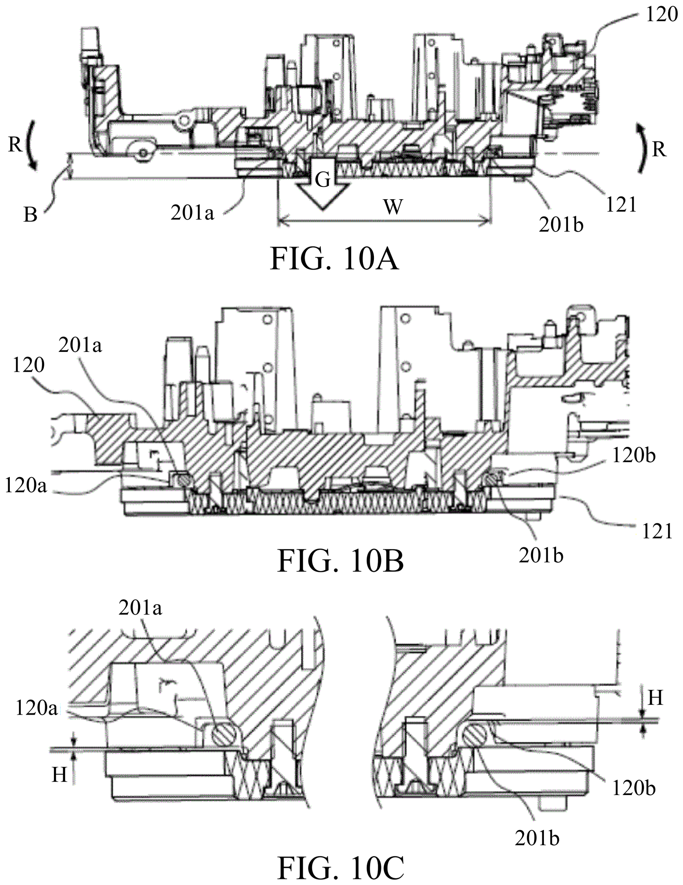

Figs. 10A, 10B, and 10C illustrate the state in which the base unit 12 has been lifted by the transport arms. Fig. 10A is a sectional view cut at the same position as that of Fig. 9B. Fig. 10B is an enlarged sectional view of Fig. 10A. Fig. 10C is a further enlarged sectional view near the concave portion in Fig. 10B.

In this embodiment, the upper transport arm 201 is larger than the lower transport arm 202, and the distance between the insertion pins 201a and 201b is wide, so tilt during transport of the base unit 12 is restricted by the upper transport arm 201. Thus, the sectional views in Figs. 9A, 9B, 10A, 10B, and 10C are sectional views on the transport arm 201 side illustrated in the sectional view of a line A-A.

There are gaps between the concave portions 120a, 120b, 120c, 120d and the insertion pins 201a, 201b, 202a, 202b to allow for component and tool errors when the insertion pins are inserted. Thus, when the base unit 12 is lifted by the transfer arms 201 and 202, a moment acts on the base unit 12 due to a shift in the center of gravity as illustrated schematically by an arrow G in Fig. 10A. The base unit 12 tilts in the direction indicated by an angle B and a rotation arrow R in Fig. 10A. As illustrated in Fig. 10C, the position of the insertion pins is biased within the concave portions, and the gap H between the insertion pins and the concave portions is at its maximum. The base unit 12 rotates until the insertion pins 201a and 201b come into contact with one end of the concave portions 120a and 120b. Since the gap is determined by the sizes of components and the accuracy of the transfer arms 201 and 202, in this embodiment a tilt amount is maintained small by widening the distance between the concave portions 120a and 120b.

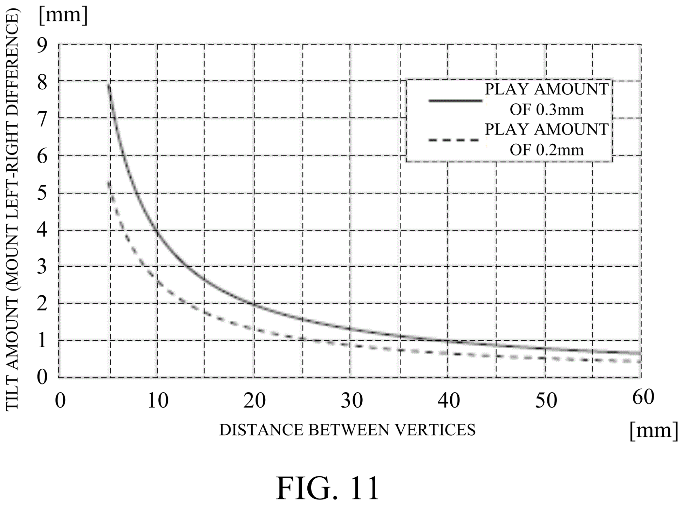

Fig. 11 is a graph illustrating a relationship between the distance between the vertices of the construction in the X direction, which is a width direction of the camera body 100, provided in the concave portion and the tilt amount of the lens mount 121. The distance between the vertices can be considered to be approximately equivalent to the distance W between the centers of the insertion pins 201a and 201b in Figs. 10A, 10B, and 10C. Fig. 11 illustrates the tilt amount when the play amount between the insertion pin and the concave portion is 0.3 mm and 0.2 mm. The play amount refers to the gap between the insertion pin and the concave portion wall; when the play amount is 0.3 mm, it means that there is a gap of 0.3 mm above and below the insertion pin, resulting in the gap H of 0.6 mm as illustrated in Fig. 10A.

In a case where a play amount between the insertion pin and the concave portion is 0.3 mm and a distance between the vertices of the construction is half the diameter of the lens mount 121, the distance between the vertices will be approximately 33 mm, and the difference in the tilt amount of the lens mount 121 between the left and right will be 1.2 mm.

In a case where the play amount between the insertion pin and the concave portion is 0.3 mm and the distance between the vertices of the construction is a quarter of the diameter of the lens mount 121, the distance between the vertices will be approximately 16.5 mm, and the left-right difference in the tilt amount of the lens mount 121 will be 2.4 mm.

In a case where the play amount between the insertion pin and the concave portion is 0.3 mm and the distance between the vertices of the construction is one-eighth of the diameter of the lens mount 121, the distance between the vertices will be approximately 8.3 mm, and the left-right difference in the tilt amount of the lens mount 121 will be 4.8 mm, which is very large.

In a case where the play amount between the insertion pin and the concave portion is 0.2 mm and the distance between the vertices of the construction is half the diameter of the lens mount 121, the distance between the vertices will be approximately 33 mm, and the left-right difference in the tilt amount of the lens mount 121 will be 0.8 mm.

In a case where the play amount between the insertion pin and the concave portion is 0.2 mm and the distance between the vertices of the construction is a quarter of the diameter of the lens mount 121, the distance between the vertices will be approximately 16.5 mm, and the left-right difference in the tilt amount of the lens mount 121 will be 1.6 mm.

In a case where the play amount between the insertion pin and the concave portion is 0.2 mm and the distance between the vertices of the construction is one-eighth of the diameter of the lens mount 121, the distance between the vertices will be approximately 8.3 mm, and the left-right difference in the tilt amount of the lens mount 121 will be 3.2 mm, which is very large.

In a case where the distance between the concave portions is smaller than a quarter of the diameter of the lens mount 121, the influence of the play amount becomes significant, and the tilt amount changes inversely proportionally, increasing rapidly as the distance approaches zero. In a case where a component tilts too much during transport, it may come into contact with the assembly apparatus or surrounding components. Installing guide members etc. to prevent contact or improve positioning accuracy could make the assembly apparatus large and complex.

The tilt amount has been illustrated as the left-right difference in the outer diameter of the lens mount 121. However, some components may be larger than the lens mount 121, and the influence of tilt increases as a position separates from the lens mount 121 to the outside, requiring even greater guide and relief.

One way to reduce the influence of tilt is to reduce the play amount between the insertion pin and concave portion or to achieve a highly accurate engagement. However, component accuracy and tool positioning accuracy are limited, and increasing accuracy of machining or control could result in reduced productivity. Therefore, the play amount may be maintained to around 0.2 to 0.3 mm, and the distance between the concave portions may be wide. An arrangement and shape may be used that allow the constructed vertices to be spaced at intervals equal to or greater than a quarter of the outer diameter of the lens mount 121.

In a case where the distance is changed from a quarter of the outer diameter of the lens mount 121 to half the outer diameter of the lens mount 121, the tilt amount tends to be halved. The wider the distance between the concave portions, the smaller the tilt amount during transport, so the concave portions may be arranged at wide intervals.

In this embodiment, the distance between the concave portions is based on the outer diameter of the lens mount 121, and in a case where the diameter of the lens mount 121 is small, the distance between the concave portions may be even smaller. However, even in this case, since the machining accuracy and positioning accuracy improve as the component and apparatus sizes reduce, the play amount may be further reduced, thereby improving the installation of the concave portions and the ease of assembly.

This embodiment provides the concave portions 120a, 120b, 120c, and 120d at positions that avoid the tapped hole 120f, the lens lock pin 123, and the mount spring 122, allowing for support during assembly. The concave portions 120a, 120b, 120c, and 120d are provided at wide intervals, allowing the lens mount 121 to be held between the transport arms 201 and 202 and transported in a stable position even when lifted, and without the risk of it falling off.

Even when a sufficient distance is unavailable due to the miniaturization of the transport arms 201 and 202 or restrictions on the surrounding shape, the distance between concave portions may be equal to or greater than a quarter of the outer diameter of the lens mount 121.

The above configuration provides dedicated concave portions for assembly support, improving assembly workability.

The number of dedicated concave portions for assembly support can be four, or even two depending on the size of the concave portion. In a case where there are no strength issues or influence on the internal space, the concave portions may be provided around the entire side surface of the mount unit.

### SECOND EMBODIMENT

The basic configuration of a camera body according to this embodiment is the same as that of the camera body 100 according to the first embodiment. This embodiment will discuss only the configuration different from that of the first embodiment, and will omit a description of the common configuration.

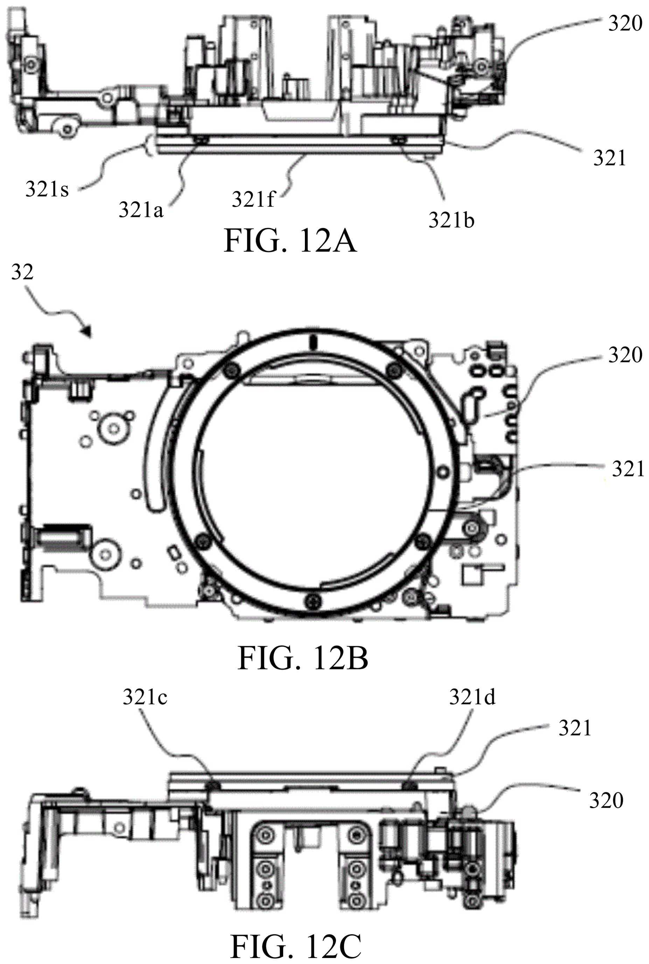

Figs. 12A, 12B, and 12C illustrate a base unit 32 in this embodiment. The mount spring 122 is assembled to a base member 320. A lens mount 321 is fixed to the base member 320 with screws. Fig. 12B is a front view. Figs. 12A and 12C are views of Fig. 12B when viewed from above and below, respectively.

As illustrated in Fig. 12A, concave portions 321a and 321b can be seen from the top surface side of the base member 320. The concave portions 321a and 321b are provided on a side surface 321s of the lens mount 321, and become hole-shaped when assembled to the base member 320. That is, a plurality of surfaces that form the concave portions 321a and 321b include a first surface that is a part of lens mount 321 and a second surface that is a part of base member 320. The side surface 321s is a surface that is perpendicular (including approximately perpendicular) to a front surface 321f, which is the subject-side surface of lens mount 321. In this embodiment, the side surface 321s is perpendicular to the front surface 321f, but it may be tilted relative to the front surface 321f.

As illustrated in Fig. 12C, concave portions 321c and 321d can be seen from the bottom surface side of the base member 320. The concave portions 321c and 321d are provided on the side surface 321s, and become hole-shaped when assembled to the base member 320. That is, a plurality of surfaces that form the concave portions 321c and 321d include a first surface that is a part of the lens mount 321 and a second surface that is a part of the base member 320.

The first embodiment provides the concave portions to the base member 320, but this embodiment provides the concave portions 321a, 321b, 321c, and 321d to the lens mount 321. In a case where a concave portion cannot be provided to the base member 320, a support portion can be formed by providing a concave portion to the lens mount 321.

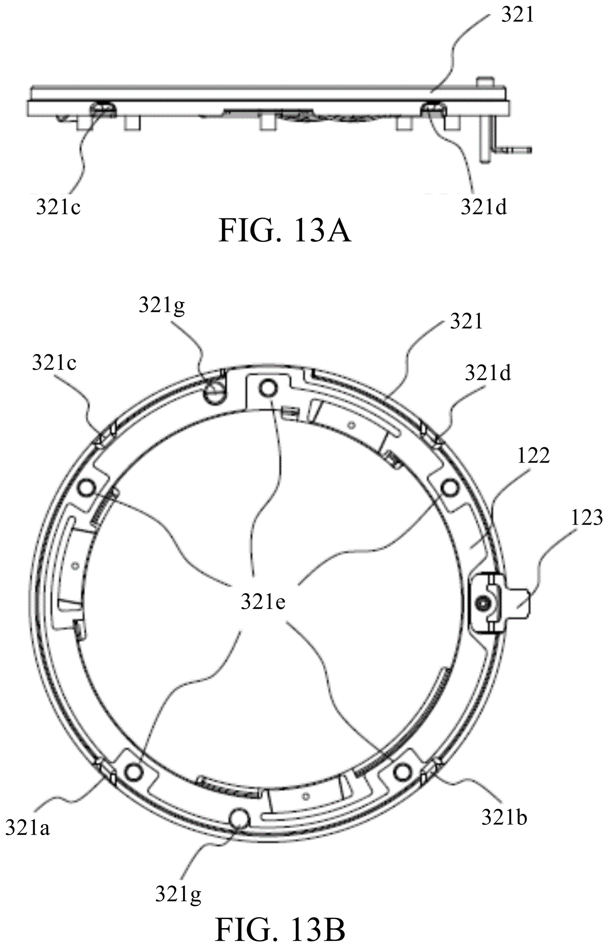

Figs. 13A and 13B illustrate the concave portions 321a, 321b, 321c, and 321d. Figs. 13A and 13B are bottom and rear views, respectively. The mount spring 122 and the lens lock pin 123 are also illustrated to explain their positional relationship.

The concave portions 321a, 321b, 321c, and 321d are provided in a range that does not affect the operation of the mount spring 122. The concave portions 321a, 321b, 321c, and 321d are disposed at positions that avoid a screw hole 321e used to secure the lens mount 321, the lens lock pin 123, and a positioning hole 321g. This embodiment provides the concave portions 321a, 321b, 321c, and 321d in a vertically and horizontally symmetrical shape, which can standardize the upper and lower transport arms, and standardize the transport arms before and after inverting the base unit 32.

The concave portions 321a, 321b, 321c, and 321d are provided to improve assembly, and as with the first embodiment, allow the insertion pins of the transport arm (not illustrated) to be inserted into them for holding or transporting during assembly.

The concave portions 321a, 321b, 321c, and 321d are provided in a range that is not exposed on the front of the lens mount 321, and at positions that are hidden when the front cover unit 190 is attached.

Although this embodiment provides four concave portions, three or two concave portions may be provided as long as the vertices are set, the constructed triangle contains the center C1, and the side length is equal to or greater than a quarter of the diameter of the lens mount.

The above configuration can provide the concave portions 321a, 321b, 321c, and 321d to the lens mount 321, form the support portion, and improve assembly workability.

### THIRD EMBODIMENT

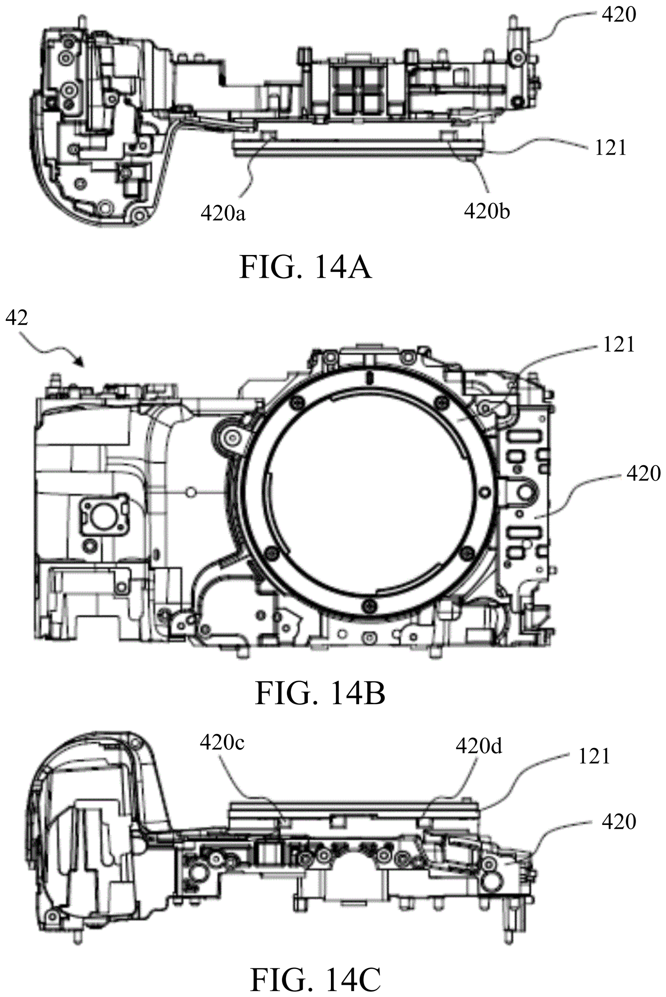

Figs. 14A, 14B, and 14C illustrate a base unit 42 provided to a camera body 400 in this embodiment. Fig. 14B is a front view of the base unit 42. Figs. 14A and 14C are views of Fig. 14B from above and below, respectively, when seen from the top surface.

The camera body 400 is larger than the camera body 100 and offers greater performance and functionality. The same lens can be used for both the camera bodies 100 and 400. A base member 420 has a shape that is wider than the base member 120 described in the first embodiment.

As illustrated in Fig. 14A, concave portions 420a and 420b can be seen from the top surface side of the base member 420. The concave portions 420a and 420b are provided on the side surface 121s of the lens mount 121 fixed to the base member 420, and become hole-shaped when assembled to the base member 420. In other words, a plurality of surfaces forming the concave portions 420a and 420b include a first surface that is a part of lens mount 121 and a second surface that is a part of the base member 420.

As illustrated in Fig. 14C, concave portions 420c and 420d can be seen from the bottom surface side of base member 420. The concave portions 420c and 420d are provided on the side surface 121s, and become hole-shaped when assembled to the base member 420. That is, a plurality of surfaces forming the concave portions 420c and 420d include a first surface that is a part of the lens mount 121 and a second surface that is a part of the base member 420.

The concave portions 420a, 420b, 420c, and 420d are provided at approximately the same positions and with approximately the same shapes as the concave portions 120a, 120b, 120c, and 120d described in the first embodiment. The lens mount 121 is one step higher than the front surface of the camera body, and there is space in the lens mount peripheral portion, allowing a tool to approach from the periphery. As in the first embodiment, the insertion pins 201a, 201b, 202a, and 202b can be inserted and held in the concave portions 420a, 420b, 420c, and 420d by gripping them with the transport arms 201 and 202, allowing the transport between processes.

The first embodiment provides the concave portions to the base member 120, while the second embodiment provides the concave portions to the lens mount 321. There are no limitations on the components that form the concave portions. In this embodiment, in a case where the lens mount with the concave portions is used, as in the second embodiment, a support portion can be provided without providing the concave portions to the base member 420. In a case where a concave portion cannot be provided to the base member 420 due to peripheral component limitations or miniaturization, providing the concave portions in the lens mount 121 is effective.

The above configuration can similarly provide the concave portions for assembly support to another camera body, improve assembly workability, and standardize of the transport tools.

### FOURTH EMBODIMENT

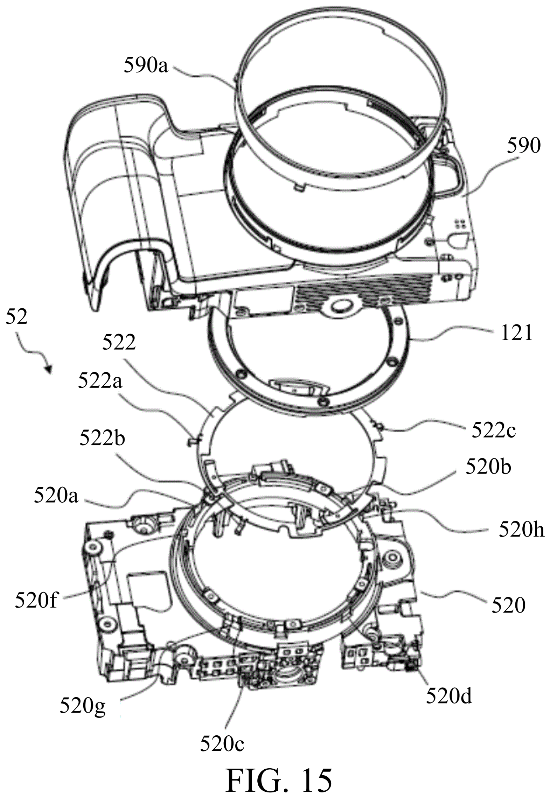

Fig. 15 is an exploded perspective view of a base unit 52 and a front cover unit 590 in a camera body 500 according to this embodiment. The front cover unit 590 is illustrated for a positional relationship, but it is actually installed in the latter half of the assembly process. A base member 520 includes concave portions 520a, 520b, 520c, and 520d.

A decorative ring 590a is a separate component from the front cover unit 590. The front cover unit 590 is primarily made of resin, while the decorative ring 590a is a metal component made of aluminum alloy. Since the decorative ring 590a is a metal component, measures against static electricity, etc. are necessary. To prevent static electricity buildup, the decorative ring 590a must be electrically conductive with the base member 520. Therefore, unlike the mount spring 122 in the first embodiment, a mount spring 522 includes leaf spring portions 522a, 522b, and 522c to ensure electrical conductivity. Similarly to the mount spring 122, the mount spring 522 is made of stainless steel, and the leaf spring portions 522a, 522b, and 522c are elastically deformable.

The mount spring 522 is fixed and sandwiched between the lens mount 121 and the base member 520. When the front cover unit 590 is assembled, the leaf spring portions 522a, 522b, and 522c come into contact with the inner periphery of the decorative ring 590a.

The base member 520 has groove shapes 520f, 520g, and 520h (groove shapes for installing electrically conductive components) that extend beyond the leaf spring portions 522a, 522b, and 522c. Sufficient space is secured to prevent contact between the leaf spring portions 522a, 522b, and 522c and the decorative ring 590a even when they come into contact and elastically deform.

The base member 520 has the concave portions 520a, 520b, 520c, and 520d to enable support by the transport arms 201 and 202. The concave portions 520a, 520b, 520c, and 520d are disposed at positions such that they do not overlap the grooves 520f, 520g, and 520h, ensuring space for inserting the insertion pins of the transport arm even after the mount spring 522 and the lens mount 121 are assembled. This space remains usable until the front cover unit 590 is assembled in the latter half of the assembly process, and since it is on the front surface portion of the main body, it is less likely to be blocked by other components.

The concave portion 520c and the groove shape 520g may be adjacent and connected, since any play in the body width direction when supported by the transport arm 202 can be restricted by the remaining wall portion and other concave portions. The play in the body width direction can be restricted by two walls: a wall on the side close to the lens mount center of the concave portion 520c, and a wall on the side close to the lens mount center of the concave portion 520d, allowing for stable support even during transport.

This embodiment uses the relief shapes of the leaf spring portions 522a, 522b, and 522c of the mount spring 522 as an example of shapes to consider when arranging the concave portions, but the present disclosure is not limited to this example. Groove shapes for machining and molding (groove shapes for manufacturing components) and the like may also be considered.

While this embodiment uses four concave portions, the number of concave portions may be three as long as the triangle constructed as illustrated in Figs. 8A, 8B, 8C, 8D, 8E, and 8F of the first embodiment contains the center C1 and the side length is equal to or greater than a quarter of the diameter of the lens mount.

The above configuration can similarly provide the concave portions for assembly support to another camera body, standardize the transport tools, and improve assembly workability.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An image pickup apparatus (100) comprising:
an image sensor; and
a mount unit (120, 121) configured to detachably hold an interchangeable lens,
**characterized in that** the mount unit (120, 121) has a plurality of concave portions (120a, 120b, 120c, 120d) in a side surface of the mount unit (120, 121),
wherein the concave portions (120a, 120b, 120c, 120d) are arranged so that, in projection in a direction parallel to an axis passing through a center (C1) of the mount unit (120, 121), a triangle with three of points included in the concave portions (120a, 120b, 120c, 120d) as vertices contains the center (C1).

2. The image pickup apparatus (100) according to claim 1, **characterized in that** the concave portions (120a, 120b, 120c, 120d) are arranged so that, in the projection, a length of the shortest side of the triangle is equal to or greater than a quarter of a diameter of the mount unit (120, 121).

3. The image pickup apparatus (100) according to claim 1 or 2, **characterized in that** the concave portions (120a, 120b, 120c, 120d) include a first concave portion (120a) disposed on a first side of the side surface divided by a surface passing through the axis and perpendicular to an imaging surface of the image sensor, and a second concave portion (120b) disposed on a second side opposite to the first side.

4. The image pickup apparatus (100) according to claim 3, **characterized in that** the number of each of the first concave portion (120a) and the second concave portion (120b) is plural.

5. The image pickup apparatus (100) according to claim 3, **characterized in that** the number of at least one of the first concave portion (120a) and the second concave portion (120b) is one.

6. The image pickup apparatus (100) according to claim 3, **characterized in that** in the projection, the first concave portion (120a) is disposed at a position symmetrical with respect to a boundary line between the first side and the second side of the second concave portion (120b).

7. The image pickup apparatus (100) according to any one of claims 1 to 6, **characterized in that** the concave portions (120a, 120b, 120c, 120d) are arranged so that in the projection, a polygon having four or more points included in the concave portion as vertices contains the center (C1) and a circle having a diameter equal to a quarter of the diameter of the mount unit (120, 121).

8. The image pickup apparatus (100) according to any one of claims 1 to 7, **characterized in that** the mount unit (120, 121) includes a base member (120) and a lens mount unit (121).

9. The image pickup apparatus (100) according to claim 8, **characterized in that** each concave portion (120a, 120b, 120c, 120d) has a plurality of surfaces,
wherein the plurality of surfaces includes a first surface that is a part of the lens mount (121) and a second surface that is a part of the base member (120).

10. The image pickup apparatus (100) according to any one of claims 1 to 9, **characterized in that** the concave portions (120a, 120b, 120c, 120d) are used during assembly.

11. The image pickup apparatus (100) according to any one of claims 1 to 10, **characterized in that** the concave portions (120a, 120b, 120c, 120d) are arranged at positions that avoid grooves for manufacturing a component and grooves for installing an electrically conductive component.

12. The image pickup apparatus (100) according to any one of claims 1 to 11, **characterized in that** the concave portions (120a, 120b, 120c, 120d) are arranged at positions common to a plurality of concave portions formed in a different image pickup apparatus.

13. The image pickup apparatus (100) according to any one of claims 1 to 12, **characterized in that** the concave portions (120a, 120b, 120c, 120d) are arranged at positions to be covered by an exterior member (190).

14. The image pickup apparatus (100) according to any one of claims 1 to 13, **characterized in that** the side surface is tilted relative to an object-side surface of the mount unit (120, 121).
